(19) Europäisches Patentamt
European Patent Office
Office européen des brevets

(11) EP 3 620 310 B1

(12) **EUROPEAN PATENT SPECIFICATION**

(45) Date of publication and mention of the grant of the patent:
**08.03.2023 Bulletin 2023/10**

(21) Application number: **18794239.6**

(22) Date of filing: **01.05.2018**

(51) International Patent Classification (IPC):
***B60C 11/00*** *(2006.01)* ***B60C 1/00*** *(2006.01)*
***C08C 19/25*** *(2006.01)* ***C08L 9/06*** *(2006.01)*
***C08L 15/00*** *(2006.01)*

(52) Cooperative Patent Classification (CPC):
**B60C 1/0016; B60C 11/0041; B60C 11/0058; C08C 19/25; C08L 9/06; C08L 15/00;**
B60C 2011/0016; B60C 2011/0025; B60C 2200/10

(86) International application number:
**PCT/JP2018/017442**

(87) International publication number:
**WO 2018/203558 (08.11.2018 Gazette 2018/45)**

(54) **TWO-WHEEL VEHICLE TIRE**

REIFEN FÜR ZWEIRÄDRIGES FAHRZEUG

PNEU DE VÉHICULE À DEUX ROUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.05.2017 JP 2017091829**

(43) Date of publication of application:
**11.03.2020 Bulletin 2020/11**

(73) Proprietor: **Bridgestone Corporation**
**Tokyo 104-8340 (JP)**

(72) Inventor: **MIYAMOTO, Yukari**
**Tokyo 104-8340 (JP)**

(74) Representative: **Marks & Clerk LLP**
**15 Fetter Lane**
**London EC4A 1BW (GB)**

(56) References cited:
**WO-A1-2008/093473**
**WO-A1-2016/194316**
**JP-A- H07 108 805**
**JP-A- H07 108 805**
**JP-A- H07 164 822**
**JP-A- H08 169 208**
**JP-A- 2007 223 569**
**JP-A- 2011 173 510**
**JP-A- 2013 139 192**
**JP-A- 2013 159 248**
**JP-A- 2013 233 847**
**JP-A- 2014 009 324**
**JP-A- 2014 009 324**
**JP-A- 2015 137 057**
**JP-A- 2017 030 506**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a tire for two-wheel vehicle.

BACKGROUND ART

The tire for two-wheel vehicle is required to have a high grip performance because the inclination of the equatorial plane of the tire relative to the road surface becomes large when cornering the vehicle. In addition, the grip performance is roughly divided into two, and improvements of dry grip performance (steering stability on dry road surface) and wet grip performance (braking performance on wet road surface) are being studied.

The tire for two-wheel vehicle is also required to have high abrasion resistance because the load loading per unit area is large.

In the tire for motorcycle, since the vehicle body of the two-wheel vehicle is substantially upright relative to the road surface during straight travel, the center section of the tire tread section mainly contacts the road surface. On the other hand, since the vehicle body of the two-wheel vehicle is inclined with respect to the road surface during turning travel, the shoulder section of the tire tread section mainly contacts the road surface.

Conventionally, as a tire for motorcycle in which both the performance required for such straight travel and the performance required for turning travel are made compatible with each other to some extent, the tire which uses two types of tread rubbers when dividing the tread into three in the tire width direction has been developed.

For example, in order to improve the high-speed durability of a pneumatic tire for motorcycle, in a pneumatic tire mounted on a motorcycle, having a tangential force coefficient is 1.1 or more and having a pair of bead sections with a bead core embedded therein, a pair of side wall sections extending from the bead sections outwardly in the tire radial direction, and a tread section extending across both the side wall sections, it is proposed that when the tread section is divided into three sections so as to have a center area including a tire equatorial plane and both shoulder areas located across the center area, in at least the center area, a tan δ/E' that is a ratio of the loss tangent tan δ to the dynamic elastic modulus E' at 60°C is regulated in a range of from 0.025 to 0.075 (for example, see PLT 1). Reference is also made to WO 2008/093473, JP H07-108805, JP H07-164822 and JP 2014-009324.

CITATION LIST

PATENT LITERATURE

PTL 1: JP-A 2006-273240

SUMMARY OF INVENTION

TECHNICAL PROBLEM

However, in the tire described in PTL 1, both the wet grip performance and the abrasion resistance cannot be made compatible with each other at high levels.

It is an object of the present invention to provide a tire for two-wheel vehicle in which both the wet grip performance and the abrasion resistance of the tread are made compatible with each other.

SOLUTION TO PROBLEM

In order to achieve the aforementioned object, the present inventor and others have made extensive and intensive investigations. As a result, it has been found that both the wet grip performance and the abrasion resistance can be made compatible with each other at high levels as a tread of a tire for two-wheel vehicle, by using a divided tread which is divided into a center section and two shoulder sections sandwiching the center section and by making a peak temperature of loss tangent tan δ of tread rubber of the center section lower than a peak temperature of loss tangent tan δ of tread rubber of the shoulder sections. The present invention is one which has been accomplished on the basis of such findings.

Specifically, the present invention is defined by the tire of claim 1. The dependent claims define preferred embodiments of the invention.

ADVANTAGEOUS EFFECTS OF INVENTION

In accordance with the present invention, it is possible to provide a tire for two-wheel vehicle in which both the wet grip performance and the abrasion resistance of the tread are made compatible with each other.

BRIEF DESCRIPTION OF DRAWINGS

Fig. 1 is a diagrammatic cross-sectional view illustrating an example of a tire for two-wheel vehicle of the present invention.

Fig. 2 is a diagrammatic cross-sectional view illustrating another example of a tire for two-wheel vehicle of the present invention.

Fig. 3 is a cross-sectional view in the inner center direction (partial enlarged view) in particles of hydrated silica.

Fig. 4 is a charge and discharge curve (diagrammatic view) of mercury of hydrated silica in measurement according to a mercury press-in method using a mercury porosimeter.

DESCRIPTION OF EMBODIMENTS

The present invention is hereunder illustrated and described in detail on the basis of embodiments thereof. In the following description, the wording "A to B" expressing a numerical value range indicates a numerical value range inclusive of A and B, each of which is an endpoint, and indicates "A or more and B or less" (when $A < B$), or "A or less and B or more" (when $A > B$).

The "part(s) by mass" and "% by mass" are synonymous with "part(s) by weight" and "% by weight", respectively.

The tire for two-wheel vehicle of the present invention is a tire for two-wheel vehicle including a pair of bead sections, a pair of side wall sections, and a tread section continuing to the both sidewall sections, the tread section being divided into three by a center section including a tire equatorial plane and a pair of shoulder sections including a tread end in the tire width direction, wherein a tread rubber of the center section and a tread rubber of the shoulder sections each contain a rubber component and satisfy the following formula (1):

$$\text{(Peak temperature of loss tangent tan } \delta \text{ of tread rubber of the center section)} < \text{(Peak temperature of loss tangent tan } \delta \text{ of tread rubber of the shoulder sections)} \quad (1).$$

The peak temperature of a loss tangent tan $\delta$ of the tread rubber of the center section and the peak temperature of a loss tangent tan $\delta$ of the tread rubber of the shoulder sections are hereunder occasionally referred to as "$T_{CL}$" as "$T_{SHO}$", respectively.

The tire for two-wheel vehicle is not particularly limited, and it may be a front tire or a rear tire, but in the present invention, since it is possible to make both high wet grip performance and high abrasion resistance of the tread compatible with each other, the effect of the present invention tends to be particularly exerted when applied to a rear tire.

The two-wheel vehicle is not particularly limited, and it is possible to select appropriately according to the purpose, and examples thereof include a competition two-wheel vehicle, a general public roadway two-wheel vehicle, an on-road two-wheel vehicle, and an off-road two-wheel vehicle. Of these, as the two-wheel vehicle in which the effect of the present invention is particularly likely exhibited, the general public roadway two-wheel vehicle and the on-road two-wheel vehicle are preferred, and the general public roadway two-wheel vehicle is more preferred.

[Structure of Tire]

The tire for two-wheel vehicle of the present invention includes a pair of bead sections, a pair of side wall sections, and a tread section continuing to the both sidewall sections, the tread section being divided into three by a center section including a tire equatorial plane and a pair of shoulder sections including a tread end in the tire width direction.

The structure of the tire is hereunder described by reference to the accompanying drawings.

Fig. 1 is a diagrammatic view illustrating an example of a cross section in the width direction of the tire for two-wheel vehicle of the present invention. In Fig. 1, a tire 10 for two-wheel vehicle includes a pair of bead sections 12, a pair of side wall sections 14, and a tread section 11 continuing to the both sidewall sections 14, the tread section 11

being divided into three by a center section 20 including a tire equatorial plane 23 and a pair of shoulder sections 22 including a tread end 24 in the tire width direction.

Each of the bead sections 12 usually has a bead core 13, and one or more carcass layers 15 extend in a toroidal shape between a pair of the bead cores 13. The carcass layer 15 is formed by rubber-coating plural carcass cords.

The sidewall sections 14 extend outwardly in the tire radial direction from the bead section 12 on the side face of the tire for two-wheel vehicle to reinforce and protect the side face.

The tread section 11 extends across the both sidewall sections 14.

In the present invention, the tread section 11 is a divided tread which is divided into the center section 20 and the two shoulder sections 22 sandwiching the center section. In the divided tread, the tread section 11 is divided into three by the center section 20 including the tire equatorial plane 23 and a pair of the shoulder sections 22 including the tread end 24. The tire equatorial plane 23 is the latitude line of the tire passing through the center in the tire width direction, and the surface in the tire circumferential direction including the tire equator is referred to as the tire equatorial plane.

In the center section 20, more specifically, a curved length (Lc) in the width direction of the surface of the tread section is preferably 30 to 60% of a maximum length ($L_T = L_C + L_{S1} + L_{S2}$) of the curved length in the width direction of the entire surface area of the tread section, and it is more preferably 40 to 50%. When the curved length ($L_C$) in the width direction of the surface of the tread section is 30% or more of the maximum length ($L_T$) of the curved length in the width direction of the entire surface area of the tread section, the abrasion resistance can be ensured, and when the curved length (Lc) in the width direction of the surface of the tread section is 60% or less, the deterioration of the wet grip performance is suppressed. If the curved length (Lc) in the width direction of the surface of the tread section is 40 to 50% of the maximum length ($L_T$) of the curved length in the width direction of the entire surface area of the tread section, it is advantageous from the standpoint of an excellent balance between the wet grip performance and abrasion resistance.

The curved length ($L_S$; $L_{S1}$ and $L_{S2}$ in Fig. 1) in the width direction of the surface of the tread section of the shoulder sections 22 may be different between one shoulder section 22 ($L_{S1}$) and the other shoulder section 22 ($L_{S2}$); however, usually, the both are preferably the same, and the curved length in the width direction of the shoulder section (one side) is preferably $[(L_T - L_C)/2]$.

The rubber constituting the tread section is referred to as a tread rubber, and the rubber constituting the shoulder sections is referred to as "tread rubber of the shoulder sections" or simply as "shoulder rubber". In addition, the rubber constituting the center section is referred to as "tread rubber of the center section" or simply as "center rubber".

The rubber composition constituting the tread rubber before vulcanization is referred to as a rubber composition for tread. Namely, the rubber obtained by vulcanizing the rubber composition for tread is a tread rubber.

In Fig. 1, the tread rubber is formed of a center rubber 16 and a shoulder rubber 17.

Fig. 2 is a diagrammatic cross-sectional view illustrating another example of the tire for two-wheel vehicle of the present invention in the width direction. The same symbols in Fig. 1 mean the same objects. In Fig. 2, the tread section 11 is divided into three in the tire width direction by the center section 20 including the tire equatorial plane 23 and a pair of the shoulder sections 22 including the tread end 24. In Fig. 2, the center rubber 16 functions as a base rubber 18 in the shoulder sections 22, and in the shoulder sections 22, the shoulder rubber 17 is provided on the base rubber 18.

[Tread Rubber]

In the present invention, as for the tread rubber, the tread rubber of the center section and the tread rubber of the shoulder sections each contain a rubber component and satisfy the following formula (1).

(Peak temperature of loss tangent tan $\delta$ of tread rubber of the center section) < (Peak temperature of loss tangent tan $\delta$ of tread rubber of the shoulder sections) (1)

Namely, a relation of $T_{CL} < T_{SHO}$ is satisfied.

Although a detailed mechanism of providing the tire for two-wheel vehicle in which both the wet grip performance and the abrasion resistance of the tread are made compatible with each other by employing the aforementioned configuration is not elucidated yet, a part thereof may be presumed as follows.

Namely, in the present invention, by using, as the tread rubber of the center section, the tread rubber having a lower peak temperature of loss tangent tan $\delta$ than the tread rubber of the shoulder sections, it may be considered that the fact that the abrasion proceeds only in the center section where it contacts during travel is suppressed. Furthermore,

by making the peak temperature ($T_{CL}$) of loss tangent tan δ of the tread rubber of the center section lower than the peak temperature ($T_{SHO}$) of loss tangent tan δ of the tread rubber of the shoulder sections, the tread rubber of the center section is readily elastically deformed during travel on the road surface, and therefore, it may be considered that the rubber readily bites the road surface, whereby the wet grip performance is improved.

From the viewpoint of more enhancing the wet grip performance of the tire of the present invention, a difference between $T_{CL}$ and $T_{SHO}$ is preferably more than 0°C and 10°C or lower, more preferably 1°C or more and 7°C or lower, and still more preferably 1°C or more and 5°C or lower.

From the viewpoint of more improving the wet grip performance and further improving the abrasion resistance of the tire of the present invention, $T_{CL}$ is preferably -20°C or higher, more preferably -15°C or higher, and still more preferably -12°C or higher. In addition, from the same viewpoint, $T_{CL}$ is preferably 5°C or lower, and more preferably 0°C or lower.

From the viewpoint of more improving the wet grip performance and suppressing the deterioration of the abrasion resistance of the tire, $T_{SHO}$ is preferably -15°C or higher, more preferably -10°C or higher, and still more preferably -5°C or higher, and it is preferably 10°C or lower, more preferably 5°C or lower, and still more preferably 3°C or lower.

In the present invention, if the tread rubber of the center section and the tread rubber of the shoulder sections are constituted so as to satisfy a relation of $T_{CL} < T_{SHO}$, the composition of the rubber component to be contained in each of the tread rubbers, or the like is not particularly limited. However, from the viewpoint of readily making both the wet grip performance and the abrasion resistance compatible with each other, it is preferred that both the center rubber and the shoulder rubber contain a styrene-butadiene-based rubber as the rubber component, or contain a filler containing silica.

Each of the components constituting the tread rubber is hereunder described.

<Rubber Component>

As described previously, in the present invention, both the tread rubber of the center section and the tread rubber of the shoulder sections each contain the rubber component, and preferably a styrene-butadiene-based rubber (SBR) is contained as the rubber component. Furthermore, the tread rubber contains a filler containing silica from the viewpoint of the abrasion resistance, from the viewpoint of enhancing the dispersibility of silica in the tread rubber to improve the abrasion resistance, both the center rubber and the shoulder rubber contain a modified conjugated diene-based polymer as the rubber component.

The fact that the tread rubber of the center section and the tread rubber of the shoulder sections contain SBR as the rubber component means that the rubber composition in an unvulcanized state contains SBR as the rubber component and indicates that SBR includes one having been crosslinked through vulcanization. The same is also applicable to other rubber components, such as a modified conjugated diene-based polymer.

The rubber component may contain other rubber than the styrene-butadiene-based rubber and the modified conjugated diene-based polymer. Examples of the other rubber include a natural rubber (NR), a butadiene rubber (BR), an acrylonitrile-butadiene-based rubber, a chloroprene rubber, and a mixture thereof.

(Styrene-Butadiene-Based Rubber)

As for the styrene-butadiene-based rubber, from the viewpoint of making the center rubber hardly abrade, the weight average molecular weight of the styrene-butadiene-based rubber to be contained in the center rubber is preferably larger than the weight average molecular weight of the styrene-butadiene-based rubber to be contained in the shoulder rubber. By adopting such a constitution, it becomes possible to hardly impair the abrasion resistance while making the loss tangent tan δ of the center rubber low.

The weight average molecular weight ($Mw_{CL}$) of the styrene-butadiene-based rubber to be contained in the center rubber is preferably 1,070,000 or more. In addition, from the viewpoint of improving the abrasion resistance of the center rubber, $Mw_{CL}$ is more preferably 1,100,000 or more, and from the viewpoint of not impairing the wet grip performance of the center rubber, $Mw_{CL}$ is preferably 1,250,000 or less.

The weight average molecular weight ($Mw_{SHO}$) of the styrene-butadiene-based rubber to be contained in the shoulder rubber is preferably less than 1,070,000.

The styrene-butadiene-based rubber having a weight average molecular weight of 1,070,000 or more is hereunder occasionally referred to as "high-molecular weight styrene-butadiene-based rubber" or "high-molecular weight SBR".

In the center rubber, from the viewpoint of the strength of the center rubber, the content of the styrene-butadiene-based rubber in the rubber component is preferably 50% by mass or more, more preferably 60% by mass or more, and still more preferably 65% by mass or more. Although an upper limit thereof is not particularly limited, it is preferably 90% by mass or less, more preferably 80% by mass or less, and still more preferably 75% by mass or less.

In the shoulder rubber, from the viewpoint of the strength of the center rubber, the content of the styrene-butadiene-based rubber in the rubber component is preferably 50% by mass or more, more preferably 70% by mass or more, and still more preferably 80% by mass or more. Although an upper limit thereof is not particularly limited, it is preferably 90% by mass or less.
The content of the styrene-butadiene-based rubber which the center rubber contains is preferably smaller than the content of the styrene-butadiene-based rubber which the shoulder rubber contains.
When the content of the styrene-butadiene-based rubber which the center rubber contains is defined as Ac, and the content of the styrene-butadiene-based rubber which the shoulder rubber contains is defined as As, in view of the fact that a relation of (Ac/As) < 1.0 is satisfied, it is possible to make both the wet grip performance and the abrasion resistance compatible with each other at higher levels.
From the viewpoint of a balance between the wet grip performance and the abrasion resistance of the center section and the shoulder sections, (Ac/As) is preferably more than 0.5. Namely, a relation of 0.5 < (Ac/As) < 1.0 is preferred. A relation of 0.6 < (Ac/As) <0.9 is more preferred.

(Modified Conjugated Diene-Based Polymer)

Both the rubber component of the center rubber and the rubber component of the shoulder rubber contain a modified conjugated diene polymer.
Furthermore, a mixture of the styrene-butadiene-based rubber and the modified conjugated diene-based polymer is preferably a main component of the rubber component. Specifically, the content of the mixture of the styrene-butadiene-based rubber and the modified conjugated diene-based polymer in the rubber component is preferably 70% by mass or more, more preferably 80% by mass or more, still more preferably 90% by mass or more, and especially preferably 100% by mass.
In both of the center rubber and the shoulder rubber, the content of the modified conjugated diene-based polymer in the rubber component is 10% by mass or more. When the content of the modified conjugated diene-based polymer in the rubber component is 10% by mass or more, the dispersibility of the filler (particularly silica) in the rubber component is excellent, and the abrasion resistance can be secured. From the viewpoint of the strength and the wet grip performance of the center rubber and the shoulder rubber, the content of the modified conjugated diene-based polymer in the rubber component of each of the tread rubbers is preferably 50% by mass or less.
In the center rubber, the content of the modified conjugated diene-based polymer in the rubber component is more preferably 10 to 50% by mass, and still more preferably 20 to 40% by mass.
In the shoulder rubber, the content of the modified conjugated diene-based polymer in the rubber component is more preferably 10 to 30% by mass, and still more preferably 10 to 20% by mass.
In the tire for two-wheel vehicle, since the center rubber is strongly required to have the abrasion resistance as compared with the shoulder rubber, the content of the modified conjugated diene-based polymer which the center rubber contains is larger than the content of the modified conjugated diene-based polymer which the shoulder rubber contains.
A molecular constitution of the modified conjugated diene-based polymer is hereunder described.
The modified conjugated diene-based polymer is a conjugated diene-based polymer having a modified functional group.
First, the conjugated diene-based polymer is described.

[Conjugated Diene-Based Polymer]

In this specification, the conjugated diene-based polymer means a homopolymer of a conjugated diene compound or a copolymer of a conjugated diene compound and a non-conjugated diene compound (polymerizable compound other than the conjugated diene compound, which is copolymerizable with the conjugated diene compound). The polymer may be any of one having been polymerized through anionic polymerization and one having been polymerized through coordination polymerization.
The monomer of the conjugated diene compound is not particularly limited and can be appropriately selected according to the purpose. Examples thereof include non-cyclic monomers, such as 1,3-butadiene, isoprene, 1,3-pentadiene, 2,3-dimethyl-1,3-butadiene, 1,3-hexadiene, and chloroprene. These may be used alone or may be used in combination of two or more thereof.
The non-conjugated diene compound is not particularly limited and can be appropriately selected according to the purpose. Examples thereof include non-cyclic monomers, such as ethylene, propylene, 1-butene, 1-pentene, 1-hexene, 1-heptene, and 1-octene; and aromatic vinyl monomers, such as styrene, $\alpha$-methylstyrene, p-methylstyrene, vinyltoluene, and vinylnaphthalene. These may be used alone or may be used in combinations of two or more thereof.
Among the modified conjugated diene-based polymers, a modified polybutadiene is preferred from the viewpoint

of the abrasion resistance.

[Modified Functional Group]

The modified functional group is not particularly limited and can be appropriately selected according to the purpose. The modified functional group of the modified conjugated diene-based polymer preferably contains at least one atom selected from the group consisting of a nitrogen atom, a silicon atom, an oxygen atom, and a tin atom; and more preferably contains at least one atom selected from the group consisting of a nitrogen atom, a silicon atom, and an oxygen atom.

Examples of the modified functional group include a modified functional group containing a nitrogen atom, a modified functional group containing a silicon atom, a modified functional group containing an oxygen atom, and a modified functional group containing a tin atom. These may be used alone or may be used in combinations of two or more thereof.

Of these, a modified functional group containing a nitrogen atom, a modified functional group containing a silicon atom, and a modified functional group containing an oxygen atom are preferred from the standpoint that favorable abrasion resistance, high reinforcing property, and high elasticity can be imparted because an interaction between the conjugated diene-based polymer and the filler, such as silica, carbon black, is strengthened.

A method of introducing a modified functional group is not particularly limited and can be appropriately selected according to the purpose. Examples thereof include a method of using a functional group-containing polymerization initiator, a method of copolymerizing a functional group-containing monomer with other compound, and a method of allowing a modifier to react on polymer terminals of the conjugated diene-based polymer. These may be performed alone or may be performed in combination of two or more thereof.

- Modified Functional Group Containing a Nitrogen Atom -

The modified functional group containing a nitrogen atom is not particularly limited and can be appropriately selected according to the purpose. Examples thereof include a substituted amino group represented by the following formula (I) and a cyclic amino group represented by the following formula (II).

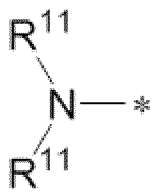

( I )

In the formula (I), $R^{11}$'s are each independently an alkyl group, a cycloalkyl group, or an aralkyl group each having 1 to 12 carbon atoms; and ∗ represents a bonding position. Here, the alkyl group is preferably a methyl group, an ethyl group, a butyl group, an octyl group, or an isobutyl group; the cycloalkyl group is preferably a cyclohexyl group; and the aralkyl group is preferably a 3-phenyl-1-propyl group.

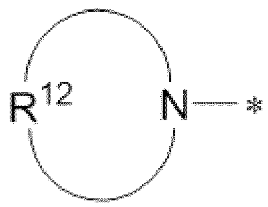

( II )

In the formula (II), $R^{12}$ is an alkylene group, a substituted alkylene group, an oxy-alkylene group, or a N-alkylamino-alkylene group each having 3 to 16 methylene groups; and ∗ represents a bonding position. Here, the substituted alkylene group includes a monosubstituted to octasubstituted alkylene group, and examples of the substituent include a linear or branched alkyl group, a cycloalkyl group, a bicycloalkyl group, an aryl group, or an aralkyl group each having 1 to 12 carbon atoms. Here, the alkylene group is preferably a trimethylene group, a tetramethylene group, a hexamethylene group, or a dodecamethylene group; the substituted alkylene group is preferably a hexadecamethylene group; the oxyalkylene group is preferably an oxydiethylene group; and the N-alkylamino-alkylene group is preferably a N-alkylazadiethylene group.

The cyclic amino group represented by the formula (II) is not particularly limited and can be appropriately selected according to the purpose. Examples thereof include groups obtained by removing one hydrogen atom bonded to the nitrogen atom, from 2-(2-ethylhexyl)pyrrolidine, 3-(2-propyl)pyrrolidine, 3,5-bis(2-ethylhexyl)piperidine, 4-phenylpiperidine, 7-decyl-1-azacyclotridecane, 3,3-dimethyl-1-azacyclotetradecane, 4-dodecyl-1-azacyclooctane, 4-(2-phenylbutyl)-1-azacyclooctane, 3-ethyl-5-cyclohexyl-1-azacycloheptane, 4-hexyl-1-azacycloheptane, 9-isoamyl-1-azacycloheptadecane, 2-methyl-1-azacycloheptadec-9-en, 3-isobutyl-1-azacyclododecane, 2-methyl-7-t-butyl-1-azacyclododecane, 5-nonyl-1-azacyclododecane, 8-(4'-methylphenyl)-5-pentyl-3-azabicyclo[5.4.0]undecane, 1-butyl-6-azabicyclo[3.2.1]octane, 8-ethyl-3-azabicyclo[3.2.1]octane, 1-propyl-3-azabicyclo[3.2.2]nonane, 3-(t-butyl)-7-azabicyclo[4.3.0]nonane, or 1,5,5-trimethyl-3-azabicyclo[4.4.0]decane. These may be used alone or may be used in combination of two or more thereof.

- Modified Functional Group Containing a Silicon Atom -

The modified functional group containing a silicon atom is not particularly limited and can be appropriately selected according to the purpose. Examples thereof include a modified functional group having a silicon-carbon bond, which is formed by using a coupling agent represented by the following formula (III).

Such a modified functional group is preferred from the standpoint that by chemically bonding the conjugated diene-based polymer to silicon via a silicon-carbon bond, the affinity between the rubber composition and the filler can be increased, and favorable abrasion resistance and high reinforcing property can be imparted to the rubber composition.

In general, in the case of merely mixing silicon in the rubber composition, the reinforcing property of the rubber composition and the like are low due to its low affinity with the polymer. However, by chemically bonding the conjugated diene-based polymer to silicon via a silicon-carbon bond, the affinity between the rubber composition and the filler can be increased, and favorable abrasion resistance and high reinforcing property can be imparted to the rubber composition.

$$(R^3)_aZ(R^4)_b \qquad \text{(III)}$$

In the formula (III), Z is silicon, $R^3$'s are each independently selected from the group consisting of an alkyl group having 1 to 20 carbon atoms, a cycloalkyl group having 3 to 20 carbon atoms, an aryl group having 6 to 20 carbon atoms, and an aralkyl group having 7 to 20 carbon atoms; $R^4$'s are each independently chlorine or bromine; a is 0 to 3; b is 1 to 4; and a + b = 4. Here, the alkyl group is preferably a methyl group, an ethyl group, a n-butyl group, a n-octyl group, or a 2-ethylhexyl; the cycloalkyl group is preferably a cyclohexyl group; the aryl group is preferably a phenyl group; and the aralkyl group is preferably a neophyl group. $R^3$'s may be the same or different. $R^4$'s may be the same or different.

The coupling agent using silicon is not particularly limited and can be appropriately selected according to the purpose. Examples thereof include a hydrocarbyloxysilane compound, $SiCl_4$ (silicon tetrachloride), $(R^3)SiCl_3$, $(R^3)_2SiCl_2$, and $(R^3)_3SiCl$.

Of these, a hydrocarbyloxysilane compound is preferred from the viewpoint that it has a high affinity with silica.

«Hydrocarbyloxysilane Compound»

The hydrocarbyloxysilane compound is not particularly limited and can be appropriately selected according to the purpose. Examples thereof include a hydrocarbyloxysilane compound represented by the following formula (IV).

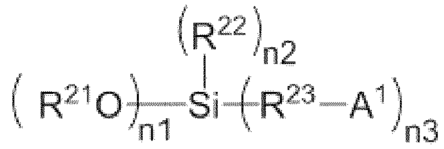

(IV)

In the formula (IV), n1 + n2 + n3 = 4 (wherein n1 is an integer of 1 to 4, and n2 and n3 are each an integer of 0 to 3); $A^1$ represents at least one functional group selected from a saturated cyclic tertiary amine compound residue, an unsaturated cyclic tertiary amine compound residue, a ketimine residue, a nitrile group, a (thio)isocyanate group (representing an isocyanate group or a thioisocyanate group, hereinafter the same), a (thio)epoxy group, a trihydrocarbyl isocyanurate group, a dihydrocarbyl carbonate group, a nitrile group, a pyridine group, a (thio)ketone group, a (thio)aldehyde group, an amide group, a (thio)carboxylate group, a (thio)carboxylate metal salt group, a carboxylic acid anhydride residue, a carboxylic acid halide residue, and a hydrolyzable group-containing primary or secondary amino group or mercapto group; when n3 is 2 or more, plural $A^1$'s may be the same or different and plural $R^{23}$'s may be the same or different; $A^1$ may be a divalent group that forms a cyclic structure upon being bonded to Si; $R^{21}$ represents a monovalent aliphatic or alicyclic hydrocarbon group having 1 to 20 carbon atoms, or a monovalent aromatic hydrocarbon group

having 6 to 18 carbon atoms, all of which may contain a nitrogen atom and/or a silicon atom; when n1 is 2 or more, plural $R^{21}$'s may be the same or different, or may be taken together to form a ring; $R^{22}$ represents a monovalent aliphatic or alicyclic hydrocarbon group having 1 to 20 carbon atoms, a monovalent aromatic hydrocarbon group having 6 to 18 carbon atoms, or a halogen atom (e.g., fluorine, chlorine, bromine, or iodine); when n2 is 2 or more, plural $R^{22}$'s may be the same or different; and $R^{23}$ represents a divalent aliphatic or alicyclic hydrocarbon group having 1 to 20 carbon atoms, or a divalent aromatic hydrocarbon group having 6 to 18 carbon atoms. The hydrolyzable group in the hydrolyzable group-containing primary or secondary amino group or the hydrolyzable group-containing mercapto group is preferably a trimethylsilyl group or a tert-butyldimethylsilyl group, and especially preferably a trimethylsilyl group. In this specification, the wording "monovalent aliphatic or alicyclic hydrocarbon group having 1 to 20 carbon atoms" means a "monovalent aliphatic hydrocarbon group having 1 to 20 carbon atoms, or a monovalent alicyclic hydrocarbon group having 3 to 20 carbon atoms". The same is also applicable to the case of the divalent hydrocarbon group.

Furthermore, the hydrocarbyloxysilane compound represented by the formula (IV) is more preferably a hydrocarbyloxysilane compound represented by the following formula (V).

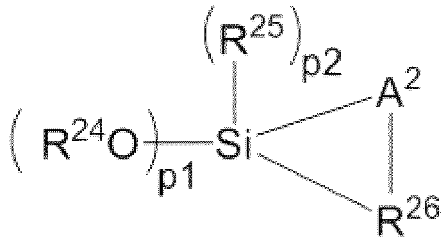

(V)

In the formula, p1 + p2 = 2 (wherein p1 is an integer of 1 to 2, and p2 is an integer of 0 to 1); $A^2$ represents NRa (wherein Ra represents a monovalent hydrocarbon group, a hydrolyzable group, or a nitrogen-containing organic group; and the hydrolyzable group is preferably a trimethylsilyl group or a tert-butyldimethylsilyl group, and especially preferably a trimethylsilyl group), or a sulfur; $R^{24}$ represents a monovalent aliphatic or alicyclic hydrocarbon group having 1 to 20 carbon atoms, or a monovalent aromatic hydrocarbon group having 6 to 18 carbon atoms, all of which may contain a nitrogen atom and/or a silicon atom; when p1 is 2, $OR^{24}$'s may be the same or different, or are taken together to form a ring; $R^{25}$ represents a monovalent aliphatic or alicyclic hydrocarbon group having 1 to 20 carbon atoms, a monovalent aromatic hydrocarbon group having 6 to 18 carbon atoms, or a halogen atom (e.g., fluorine, chlorine, bromine, or iodine); and $R^{26}$ represents a divalent aliphatic or alicyclic hydrocarbon group having 1 to 20 carbon atoms, or a divalent aromatic hydrocarbon group having 6 to 18 carbon atoms.

The hydrocarbyloxysilane compound represented by the formula (IV) is more preferably a hydrocarbyloxysilane compound represented by the following formula (VI) or (VII).

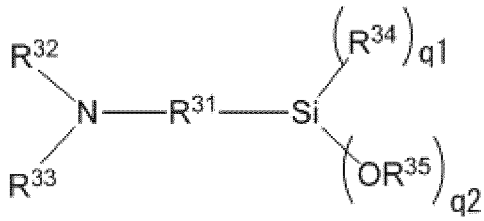

(VI)

In the formula (VI), q1 + q2 = 3 (wherein q1 is an integer of 0 to 2, and q2 is an integer of 1 to 3); $R^{31}$ represents a divalent aliphatic or alicyclic hydrocarbon group having 1 to 20 carbon atoms, or a divalent aromatic hydrocarbon group having 6 to 18 carbon atoms; $R^{32}$ and $R^{33}$ each independently represent a hydrolyzable group, a monovalent aliphatic or alicyclic hydrocarbon group having 1 to 20 carbon atoms, or a monovalent aromatic hydrocarbon group having 6 to 18 carbon atoms; $R^{34}$ represents a monovalent aliphatic or alicyclic hydrocarbon group having 1 to 20 carbon atoms, or a monovalent aromatic hydrocarbon group having 6 to 18 carbon atoms; when q1 is 2, plural $R^{34}$'s may be the same or different; $R^{35}$ represents a monovalent aliphatic or alicyclic hydrocarbon group having 1 to 20 carbon atoms, or a monovalent aromatic hydrocarbon group having 6 to 18 carbon atoms; and when q2 is 2 or more, plural $R^{35}$'s may be the same or different.

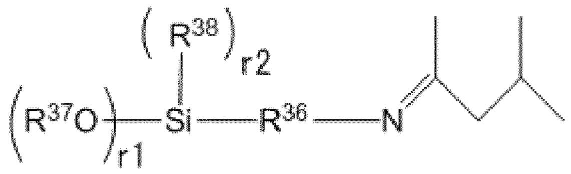

(VII)

In the formula (VII), r1 + r2 = 3 (where r1 is an integer of 1 to 3, and r2 is an integer of 0 to 2); $R^{36}$ represents a divalent aliphatic or alicyclic hydrocarbon group having 1 to 20 carbon atoms, or a divalent aromatic hydrocarbon group having 6 to 18 carbon atoms; $R^{37}$ represents a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic or alicyclic hydrocarbon group having 1 to 20 carbon atoms, or a monovalent aromatic hydrocarbon group having 6 to 18 carbon atoms; when r1 is 2 or more, plural $R^{37}$'s may be the same or different; $R^{38}$ represents a monovalent aliphatic or alicyclic hydrocarbon group having 1 to 20 carbon atoms, or a monovalent aromatic hydrocarbon group having 6 to 18 carbon atoms; and when r2 is 2, the two $R^{38}$'s may be the same or different.

It is also preferred that the hydrocarbyloxysilane compound represented by the formula (IV) has two or more nitrogen atoms as represented by the following formula (VIII) or (IX).

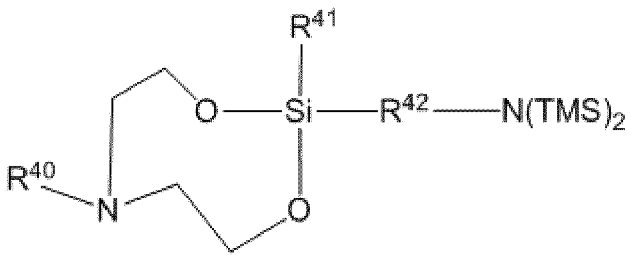

(VIII)

In the formula (VIII), TMS represents a trimethylsilyl group; $R^{40}$ represents a trimethylsilyl group, a monovalent aliphatic or alicyclic hydrocarbon group having 1 to 20 carbon atoms, or a monovalent aromatic hydrocarbon group having 6 to 18 carbon atoms; $R^{41}$ represents a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms; and $R^{42}$ represents a divalent aliphatic or alicyclic hydrocarbon group having 1 to 20 carbon atoms, or a divalent aromatic hydrocarbon group having 6 to 18 carbon atoms.

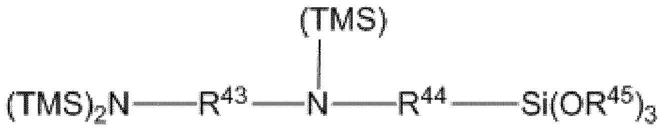

(IX)

In the formula (IX), TMS represents a trimethylsilyl group; $R^{43}$ and $R^{44}$ each independently represent a divalent aliphatic or alicyclic hydrocarbon group having 1 to 20 carbon atoms, or a divalent aromatic hydrocarbon group having 6 to 18 carbon atoms; $R^{45}$ represents a monovalent aliphatic or alicyclic hydrocarbon group having 1 to 20 carbon atoms, or a monovalent aromatic hydrocarbon group having 6 to 18 carbon atoms; and plural $R^{45}$'s may be the same or different.

The hydrocarbyloxysilane compound represented by the formula (IV) is also preferably a hydrocarbyloxysilane compound represented by the following formula (X).

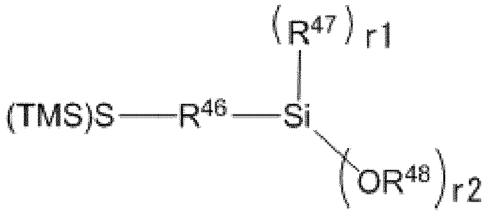

(X)

In the formula (X), r1 + r2 = 3 (wherein r1 is an integer of 0 to 2, and r2 is an integer of 1 to 3); TMS represents a trimethylsilyl group; $R^{46}$ represents a divalent aliphatic or alicyclic hydrocarbon group having 1 to 20 carbon atoms, or a divalent aromatic hydrocarbon group having 6 to 18 carbon atoms; $R^{47}$ and $R^{48}$ each independently represent a monovalent aliphatic or alicyclic hydrocarbon group having 1 to 20 carbon atoms, or a monovalent aromatic hydrocarbon group having 6 to 18 carbon atoms; and plural $R^{47}$'s may be the same or different and plural $R^{48}$'s may be the same or different.

Furthermore, the hydrocarbyloxysilane compound represented by the formula (IV) is also preferably a compound represented by the following formula (XI).

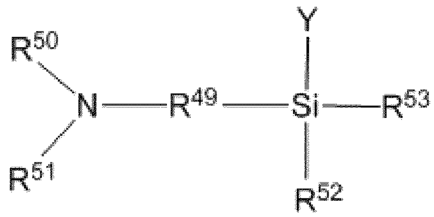

(XI)

In the formula (XI), Y represents a halogen atom; $R^{49}$ represents a divalent aliphatic or alicyclic hydrocarbon group having 1 to 20 carbon atoms, or a divalent aromatic hydrocarbon group having 6 to 18 carbon atoms; $R^{50}$ and $R^{51}$ each independently represent a hydrolyzable group, a monovalent aliphatic or alicyclic hydrocarbon group having 1 to 20 carbon atoms, or a monovalent aromatic hydrocarbon group having 6 to 18 carbon atoms, or $R^{50}$ and $R^{51}$ are taken together to form a divalent organic group; and $R^{52}$ and $R^{53}$ each independently represent a halogen atom, a hydrocarbyloxy group, a monovalent aliphatic or alicyclic hydrocarbon group having 1 to 20 carbon atoms, or a monovalent aromatic hydrocarbon group having 6 to 18 carbon atoms. Preferably, $R^{50}$ and $R^{51}$ are each a hydrolyzable group; and the hydrolyzable group is more preferably a trimethylsilyl group or a tert-butyldimethylsilyl group, and especially preferably a trimethylsilyl group.

The hydrocarbyloxysilane compound represented by the aforementioned formulae (IV) to (XI) is preferably used in the case where the modified conjugated diene-based polymer is produced through anionic polymerization.

The hydrocarbyloxysilane compound represented by the aforementioned formulae (IV) to (XI) is preferably an alkoxysilane compound.

A modifier which is suitable in the case of modifying the diene-based polymer through anionic polymerization is not particularly limited and can be appropriately selected according to the purpose. Examples thereof include 3,4-bis(trimethylsilyloxy)-1-vinylbenzene, 3,4-bis(trimethylsilyloxy)benzaldehyde, 3,4-bis(tert-butyldimethylsilyloxy)benzaldehyde, 2-cyanopyridine, 1,3-dimethyl-2-imidazolidinone, and 1-methyl-2-pyrrolidone. These may be used alone or may be used in combination of two or more thereof.

The hydrocarbyloxysilane compound is preferably an amide moiety of a lithium amide compound to be used as a polymerization initiator in the anionic polymerization.

The lithium amide compound is not particularly limited and can be appropriately selected according to the purpose. Examples thereof include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperadide, lithium ethylpropylamide, lithium ethylbutylamide, lithium ethylbenzylamide, and lithium methylphenethylamide. For example, the modifier constituting the amide moiety of lithium hexamethyleneimide is hexamethyleneimine, the modifier constituting the amide moiety of lithium pyrrolidide is pyrrolidine, and the modifier constituting the amide moiety of lithium piperidide is piperidine. These may be used alone or may be used in combination of two or more thereof.

- Modified Functional Group Containing an Oxygen Atom -

The modified functional group containing an oxygen atom is not particularly limited and can be appropriately selected according to the purpose. Examples thereof include alkoxy groups, such as a methoxy group, an ethoxy group, a n-propoxy group, an isopropoxy group, a n-butoxy group, a sec-butoxy group, and a t-butoxy group; alkoxyalkyl groups, such as a methoxymethyl group, a methoxyethyl group, an ethoxymethyl group, and an ethoxyethyl group; alkoxyaryl groups, such as a methoxyphenyl group and an ethoxyphenyl group; alkylene oxide groups, such as an epoxy group and a tetrahydrofuranyl group; and trialkylsilyloxy groups, such as a trimethylsilyloxy group, a triethylsilyloxy group, and a t-butyldimethylsilyloxy group. These may be used alone or may be used in combination of two or more thereof.

<Filler>

Preferably, the tread rubber contains 40 to 120 parts by mass of the filler based on 100 parts by mass of the rubber component.

When the content of the filler based on 100 parts by mass of the rubber component is 40 parts by mass or more, the wet grip performance is excellent, and when it is 120 parts by mass or less, both the abrasion resistance and the wet grip performance can be made compatible with each other at high levels. When the content of the filler relative to the rubber component falls within a preferred range or a more preferred range, such is advantageous from the standpoint that it is possible to obtain a grip performance in which the biting property of the rubber against the road surface is balanced with the loss.

The content of the filler based on 100 parts by mass of the rubber component is more preferably 60 to 120 parts by mass, and still more preferably 80 to 110 parts by mass.

The filler contains at least silica and may further contain other filler, such as carbon black.

(Silica)

The content of silica in the filler is 80% by mass or more.

The content of silica in the filler is hereinafter occasionally referred to as "silica ratio".

When the silica ratio is 80% by mass or more, the abrasion resistance can be improved. The silica ratio is more preferably 84% by mass or more, and still more preferably 87% by mass or more. In addition, from the viewpoint of a balance between the wet grip performance and the abrasion resistance, the silica ratio is preferably less than 100% by mass, and more preferably 97%by mass or less.

Furthermore, as a whole of the tire, from the viewpoint of improving the abrasion resistance, both the center rubber and the shoulder rubber each contain the filler containing 80% by mass or more of silica in an amount of preferably 70 parts by mass or more, more preferably 80 parts by mass or more, and still more preferably 86 parts by mass or more based on 100 parts by mass of the rubber component.

The silica is not particularly limited and can be appropriately selected according to the purpose. Examples thereof include wet method silica (hydrated silica), dry method silica (anhydrous silica), calcium silicate, and aluminum silicate. These may be used alone or may be used in combinations of two or more thereof.

Of these, wet method fine particle size silica, fine powder-shaped wet method silica, and dry method silica are preferred, and in particular, wet method silica is advantageous from the standpoint that it exhibits a remarkable effect with respect to improvement of the abrasion resistance and improvement of the wet grip performance.

Although a nitrogen adsorption specific surface area of the silica is not particularly limited and can be appropriately selected according to the purpose, it is preferably 80 to 300 $m^2/g$.

When the nitrogen adsorption specific surface area of the silica is 80 $m^2/g$ or more, a sufficient reinforcing property can be obtained, and when it is 300 $m^2/g$ or less, such is preferred from the standpoint that the deterioration in workability can be suppressed. The nitrogen adsorption specific surface area ($N_2SA$) refers to a specific surface area by the nitrogen adsorption method described in JIS K 6430:2008.

Since the fine particle size silica or fine powder-shaped silica has a large specific area, it is preferred from the standpoint that the abrasion resistance of the tread rubber can be enhanced. Above all, wet method fine particle size silica is preferred. Hereinafter, when the wording "fine particle size silica" is simply referred to, it indicates wet method fine particle size silica (fine particlesize hydrated silica).

(Fine Particle Size Silica)

The fine particle size silica refers to wet method silica (hydrated silica) having a fine particle diameter and is preferably hydrated silica in which a cetyltrimethylammonium bromide adsorption specific surface area (CTAB) ($m^2/g$) and an ink bottle-shaped micropore index (IB) determined with a mercury porosimeter satisfy the following formula (Y).

$$\mathrm{IB} \leq -0.36 \times \mathrm{CTAB} + 86.8 \qquad (Y)$$

Here, the cetyltrimethylammonium bromide adsorption specific surface area (CTAB) ($m^2/g$) means a value measured in conformity with ASTM D3765-92. However, ASTM D3765-92 is concerned with the method for measuring CTAB of carbon black. Therefore, in this specification, a specific surface area ($m^2/g$) obtained by separately preparing a standard liquid of cetyltrimethylammonium bromide (hereinafter abbreviated as "CE-TRAB") in place of IRB#3 (83.0 $m^2/g$) that is a standard material, performing standardization of a hydrated silica OT (sodium di-2-ethylhexylsulfosuccinate) solution with this, and calculating an adsorption amount of CE-TRAB while an adsorption cross-sectional area per

molecule of CE-TRAB relative to the hydrated silica surface is defined as 0.35 $nm^2$. It may be considered that this is caused due to the fact that the surface is different between carbon black and hydrated silica, and therefore, the adsorption amount of CE-TRAB is different even at the same surface area.

The ink bottle-shaped micropore index (IB) is defined by the following formula: IB = M2 - M1 (X) provided, in measurement on the basis of a mercury press-in method using a mercury porosimeter of hydrated silica, that: the hydrated silica has particles each provided with micropores with openings having a diameter ranging from $1.2 \times 10^5$ nm to 6 nm formed on the outer surface of the particle; a diameter (M1) (nm) of the opening exhibiting a maximum value of a mercury charge rate when the pressure is increased from 1 PSI to 32000 PSI; and a diameter (M2) (nm) of the opening exhibiting a maximum value of a mercury discharge rate when the pressure is decreased from 32000 PSI to 1 PSI.

The measurement with a mercury porosimeter on the basis of the mercury press-in method is useful because it is not only simpler and easier than the measurement with an electron microscope often employed in the background art in evaluation of the micropore morphology but also excellent in quantitativity.

In general, particles of hydrated silica have a large number of micropores seen as recessed portions with openings formed on the outer surface of the particle. Fig. 3 illustrates a diagrammatic view of configurations of such micropores in a cross section in the inner center direction in the particle of hydrated silica.

Micropores seen as recessed portions in a cross section in the inner center direction of a hydrated silica particle have various shapes. For example, a type A micropore has a configuration in which a diameter $M_a$ of an opening on the outer surface of the particle is substantially equal to a micropore diameter in the interior of the particle (the inner diameter) $R_a$, i.e., a substantially cylindrical configuration in the cross section in the inner center direction of the particle. On the other hand, a type B micropore has a configuration in which a diameter $M_b$ of an opening on the outer surface of the particle is smaller than a micropore diameter in the interior of the particle (the inner diameter) $R_b$, i.e., an ink bottle-like configuration in the cross section in the inner center direction of the particle. However, in the case of type B micropore having an ink bottle-shaped configuration in the cross section in the inner center direction of the particle, molecular chains of the rubber hardly enter the micropore from the outer surface toward the interior of the particle. Therefore, on the occasion of mixing the hydrated silica with the rubber component, the molecular chains of the rubber cannot be sufficiently adsorbed, so that there is a concern that not only rolling resistance is deteriorated, but also the reinforcing property becomes insufficient, thereby making it difficult to attempt to improve the abrasion resistance. In consequence, by decreasing the number of ink bottle-shaped type B micropores and increasing the number of type A micropores seen in a substantially cylindrical shape in the cross section in the inner center direction of the particle, entry of rubber molecular chains can be efficiently facilitated, and sufficient reinforcing property is exhibited, thereby making it possible to contribute to improvement of the abrasion resistance without deteriorating the rolling resistance.

From the aforementioned viewpoint, with respect to the fine particle size silica which the tread rubber contains, the aforementioned ink bottle-shaped micropore index (IB) is prescribed in order to decrease the number of type B micropores having ink bottle-shaped configurations in the cross section in the inner center direction of the silica particle in the present invention. As mentioned above, in the measurement with a mercury porosimeter on the basis of a mercury press-in method, on the occasion of increasing the pressure, mercury is relatively easily charged into the inner portion of the type A micropore having a substantially cylindrical configuration because an opening thereof formed on the outer surface thereof is open to the exterior. However, mercury is less easily charged into the inner portion of the type B micropore having an ink bottle-shaped configuration because an opening of the type B micropore formed at the outer surface thereof is closed to the exterior. On the other hand, mercury is relatively easily discharged from the inner portion of the type A micropore having a substantially cylindrical configuration toward the exterior of the micropore when the pressure is decreased, while mercury is less easily discharged from the inner portion of the type B micropore having an ink bottle-shaped configuration toward the exterior of the micropore when the pressure is decreased for the same reasons as described above.

In consequence, there is generated hysteresis in mercury charge and discharge curves C and D in measurement on the basis of a mercury press-in method using a mercury porosimeter, as illustrated in Fig. 4. Namely, although mercury is gradually charged into the type A micropores having substantially cylindrical configurations at a relatively low pressure, when the pressure has reached a certain value, the mercury bursts into other micropores than the type A micropores, such as type B micropores having ink bottle-shaped configurations, which are less accessible for mercury than the type A micropores. As a result, the charge rate rapidly increases, and the mercury charge curve C is plotted when the ordinate of the graph represents a differential mercury charge rate (-dV/d(log d)), and the abscissa of the graph represents a diameter M (nm) of an opening of a micropore of the hydrated silica. On the other hand, when the pressure is decreased after having been sufficiently increased, a state where mercury is not easily discharged is maintained under a relatively high pressure, and when the pressure has dropped to a certain value, mercury charged in micropores bursts into the exterior of the micropores. As a result, the discharge rate rapidly increases, and the mercury discharge curve D is plotted when the ordinate of the graph represents a differential mercury discharge rate (-dV/d(log d)), and the abscissa of the graph represents a diameter M (nm) of an opening of a micropore of a particle of the hydrated silica. Mercury once charged into micropores tends to remain in a state where it is not easily discharged when the pressure decreases,

whereby an increase in the discharge rate is observed, and when the pressure decreases, at a position in the graph corresponding to a diameter (M2) larger than a diameter (M1) at which an increase in the charge rate occurs when the pressure increases. "IB" illustrated in Fig. 4 corresponds to a difference in these two diameters, i.e., (M2 - M1). The tendency that mercury once charged in micropores is not easily discharged is conspicuous in the type B micropores having ink bottle-shaped configurations in particular. Mercury charged in the type B micropores at a certain high pressure is not substantially discharged toward the exterior of the micropores at the same certain high pressure when the pressure is decreased.

IB as a difference between M1 and M2, determined on the basis of the aforementioned formula (X) by employing the aforementioned measurement method and utilizing the mercury charge and discharge curves C and D plotted based on characteristics of micropores, provided that: "M1" (nm) represents a diameter of the opening exhibiting the maximum value of the mercury charge rate when the pressure is increased from 1 PSI to 32,000 PSI in measurement with a mercury porosimeter on the basis of a mercury press-in method; and "M2" (nm) represents a diameter of the opening exhibiting the maximum value of the mercury discharge rate when the pressure is decreased from 32,000 PSI to 1 PSI in the measurement, thus substantially represents a micropore index indicating a presence ratio of the type B micropores having ink bottle-shaped configurations present in the hydrated silica, although IB apparently is a difference in the diameter (length: nm) between M1 and M2. Namely, the smaller presence ratio of the type B micropores having ink bottle-shaped configurations with sufficiently narrow openings results in the smaller difference between the mercury charge rate and the mercury discharge rate, i.e., the smaller IB value due to the smaller difference between the diameter (M1) of the opening exhibiting the maximum value of the mercury charge rate and the diameter (M2) of the opening exhibiting the maximum value of the mercury discharge rate. On the other hand, the larger presence ratio of the type B micropores having ink bottle-shaped configurations results in the larger difference between the mercury charge rate and the mercury discharge rate, i.e., the larger IB value due to the larger difference between the diameter (M1) of the opening exhibiting the maximum value of the mercury charge rate and the diameter (M2) of the opening exhibiting the maximum value of the mercury discharge rate.

IB described above characteristically changes in accordance with the aforementioned CTAB value. IB tends to decrease as CTAB increases. In consequence, it is preferred that the fine particle size silica satisfies the formula (Y). The silica in which IB and CTAB satisfy the formula (Y) has the effectively reduced number of type B micropores having ink bottle-shaped configurations with narrow openings, as well as a large presence ratio of type A micropores having substantially cylindrical configurations, whereby rubber molecular chains can sufficiently enter micropores of the hydrated silica and be adsorbed therein, to cause a satisfactory reinforcing property, thereby making it possible to attempt to improve the abrasion resistance of a tire without deteriorating the rolling resistance property.

The cetyltrimethylammonium bromide adsorption specific surface area (CTAB) of the fine particle size silica is preferably 50 to 250 $m^2/g$, and more preferably 90 to 220 $m^2/g$. When the CTAB is 50 $m^2/g$ or more, the deterioration of the abrasion resistance of the tire can be suppressed, whereas when it is 250 $m^2/g$ or less, the fine particle size silica is readily dispersed in the rubber component, and the deterioration of workability of the rubber is suppressed, and in its turn, the deterioration of physical properties, such as abrasion resistance, can be suppressed.

The content of the fine particle size silica in the tread rubber is preferably 10 to 150 parts by mass, more preferably 30 to 100 parts by mass, and still more preferably 60 to 100 parts by mass based on 100 parts by mass of the rubber component. When the content of the fine particle size silica in the tread rubber is 10 parts by mass or more based on 100 parts by mass of the rubber component, the low heat generation property of the tread rubber is hardly impaired, whereas when it is 150 parts by mass or less, the workability of the rubber is hardly deteriorated, whereby the deterioration of the abrasion resistance of the resulting tire can be prevented from occurring.

(Carbon Black)

Carbon black is not particularly limited and can be appropriately selected according to the purpose. Examples thereof include HAF, ISAF, and SAF based on the classification by ASTM (American Society for Testing and Materials). These may be used alone or may be used in combination of two or more thereof.

Of these, ISAF and SAF are preferred from the standpoint that the reinforcing property can be improved.

Although the nitrogen adsorption specific surface area ($N_2SA$) of carbon black is not particularly limited and can be appropriately selected according to the purpose, it is preferably 70 $m^2/g$ or more.

When the nitrogen adsorption specific surface area ($N_2SA$) of carbon black is 70 $m^2/g$ or more, such is advantageous from the standpoint that the abrasion resistance can be favorably improved. The nitrogen adsorption specific surface area ($N_2SA$) means the nitrogen adsorption specific surface area described in JIS K 6217-2:2001.

The content of carbon black in the filler (hereinafter occasionally referred to as "carbon black ratio") is preferably more than 0% by mass and 20% by mass or less.

When the filler contains carbon black, the strength of the tread rubber is improved, whereas when the carbon black ratio is 20% by mass or less, such is preferable from the standpoint that the deterioration of the wet grip performance

can be suppressed. The carbon black ratio is more preferably 3 to 15% by mass.

<Rubber Composition for Tread>

The tread rubber of the present invention is obtained by vulcanizing a rubber composition (rubber composition for tread) containing the aforementioned rubber component, filler, vulcanizing agent, and other additive components.
The components that may be contained in the rubber composition for tread are hereunder described.

(Vulcanizing Agent)

The vulcanizing agent is not particularly limited, and sulfur is usually used. Examples thereof include powdered sulfur, precipitated sulfur, colloidal sulfur, surface-treated sulfur, and insoluble sulfur.
The content of the vulcanizing agent in the rubber composition for tread is preferably 0.1 to 10 parts by mass based on 100 parts by mass of the rubber component. When the content of the vulcanizing agent is 0.1 part by mass or more, vulcanization can be allowed to proceed thoroughly, and when the content of the vulcanizing agent is 10 parts by mass or less, the deterioration of aging resistance of the vulcanized rubber can be suppressed.
The content of the vulcanizing agent in the rubber composition for tread is more preferably 0.5 to 7.0 parts by mass, and still more preferably 1.0 to 5.0 parts by mass based on 100 parts by mass of the rubber component.

(Other Additive Components)

The rubber composition for tread can further contain a compounding agent which is commonly used in the rubber industry, for example, a vulcanization accelerator, such as a zinc compound typified by zinc oxide; a vulcanization retarder; a process oil, such as an aromatic oil; a plasticizer, such as a wax; a synthetic resin, such as a petroleum resin, a phenol-based resin, a coal-based resin, and a xylene-based resin; a natural resin, such as a rosinbased resin and a terpene-based resin; a fatty acid, such as stearic acid; an antioxidant, within a range where the effect of the present invention is not impaired.
From the viewpoint of giving elasticity to the center rubber and making it easy to satisfy the relation of $T_{CL} < T_{SHO}$, it is preferred that the center rubber contains, in addition to the aforementioned rubber component and filler, at least one selected from the group consisting of a process oil, a plasticizer, a synthetic resin, and a natural resin. From the viewpoint of making it easy to satisfy the relation of $T_{CL} < T_{SHO}$, the content of the process oil in the center rubber is preferably 5 to 30 parts by mass based on 100 parts by mass of the rubber component.
From the viewpoint of controlling the loss tangent tan $\delta$ of the shoulder rubber and making it easy to satisfy the relation of $T_{CL} < T_{SHO}$, it is also preferred that the shoulder rubber contains at least one selected from the group consisting of a process oil, a plasticizer, a synthetic resin, and a natural resin.
Examples of the antioxidant include 3C (N-isopropyl-N'-phenyl-p-phenylenediamine), 6C [N-(1,3-dimethylbutyl)-N'-phenyl-p-phenylenediamine], AW (6-ethoxy-2,2,4-trimethyl-1,2-dihydroquinoline), and a high-temperature condensation product of diphenylamine and acetone.
The rubber composition for tread can be produced by mixing the rubber component, the filler, and the vulcanizing agent, and optionally the aforementioned other additive components, and kneading the mixture using a kneading machine, such as a Banbury mixer, a roll, and an internal mixer.
The respective components may be kneaded at a single stage, or two or more divided stages. In the case where kneading is performed at two stages, a maximum temperature of the first stage of kneading is preferably 140 to 160°C, and a maximum temperature of the second stage is preferably 90 to 120°C.

## Examples

The present invention is hereunder described in more detail by reference to Examples, but it should be construed that the present invention is by no means limited to the following Examples.

<Examples 1 to 9 and Comparative Examples 1 to 7>

[Synthesis of Modified Butadiene Rubber (Modified Conjugated Diene-Based Polymer, Modified BR)]

(1) Preparation of Catalyst

7.11 g of a cyclohexane solution of butadiene (15.2% by mass), 0.59 mL of a cyclohexane solution of neodymium neodecanoate (0.56 M), 10.32 mL of a toluene solution of methylaluminoxane MAO (PMAO, manufactured by Tosoh

Akzo Corporation) (3.23 M as aluminum concentration), and 7.77 mL of a hexane solution of diisobutylaluminum hydride (manufactured by Kanto Chemical Co., Inc.) (0.90 M) were, in that order, charged in a dried, nitrogen-purged rubber stopper-provided glass bottle having a capacity of about 100 mL, and ripened at room temperature for 2 minutes. Then, 1.45 mL of a hexane solution of diethylaluminum chloride (manufactured by Kanto Chemical Co., Inc.) (0.95 M) was added thereto and ripened for 15 minutes at room temperature with intermittently stirring. A neodymium concentration in the thus obtained catalyst solution was 0.011 M (mol/L).

(2) Preparation of Polymer Intermediate

In a dried nitrogen-purged rubber stopper-provided glass bottle having a volume of about 900 mL, a cyclohexane solution of dried and purified 1,3-butadiene and dry cyclohexane were charged, respectively to provide a condition where 400 g of a cyclohexane solution of 12.5% by mass of 1,3-butadiene was kept in the bottle. Subsequently, 2.28 mL (0.025 mmol as expressed in terms of neodymium) of the catalyst solution prepared in (1) above was charged in the bottle, and polymerization was performed in a warm water bath at 50°C for 1.0 hour.

(3) Primary Modification Treatment

A hexane solution of 3-glycidoxypropyltrimethoxysilane (1.0 M) as a primary modifier was added so that the amount of 3-glycidoxypropyltrimethoxysilane was 23.5 molar equivalents (relative to neodymium), and treated at 50°C for 60 minutes to perform the primary modification.

(4) Treatment after Secondary Modification

Subsequently, 1.76 mL (corresponding to 70.5 eq/Nd) of a cyclohexane solution (1.01 M) of bis(2-ethylhexanoate)tin (BEHAS) as a condensation accelerator and 32 μL (corresponding to 70.5 eq/Nd ) of ion exchanged water were added thereto and treated in a warm water bath at 50°C for 1.0 hour. Thereafter, 2 mL of a 5% by mass isopropanol solution of an antioxidant 2,2-methylene-bis(4-ethyl-6-t-butyl phenol) (NS-5) was added to the polymerization system, to terminate the reaction, and the reaction mixture was subjected to reprecipitation in isopropanol containing a minute amount of NS-5, followed by subjecting to drum drying to obtain the modified BR that is a modified butadiene rubber (modified conjugated diene-based polymer). A Mooney viscosity $ML_{1+4}$ (at 100°C) of the obtained modified BR was measured at 100°C with an RLM-01 type tester, manufactured by Toyo Seiki Seisakusho Co., Ltd. and found to be 93.

[Preparation of Unmodified Butadiene Rubber (Unmodified BR)]

As an unmodified butadiene rubber (unmodified BR), UBEPOL BR150L (manufactured by Ube Industries, Ltd.) was used.

[Preparation of Styrene-Butadiene Rubber (SBR1)]

As a styrene-butadiene rubber (SBR1), a product name: TUFDENE 3835 (containing 37.5 parts by mass of an oil based on 100 parts by mass of the styrene-butadiene rubber), manufactured by Asahi Kasei Chemicals Corporation was used.

The amount of SBR1 in Tables 2 and 3 is the amount of SBR1 itself from which the oil is excluded.

[Preparation of Styrene-Butadiene Rubber (SBR2)]

As a styrene-butadiene rubber (SBR2), a product name: TUFDENE E581 (containing 37.5 parts by mass of an oil based on 100 parts by mass of the styrene-butadiene rubber), manufactured by Asahi Kasei Corporation was used.

The amount of SBR2 in Tables 2 and 3 is the amount of SBR2 itself from which the oil is excluded.

The weight average molecular weight (Mw) of each of SBR1 and SBR2 was measured by gel permeation chromatography (GPC) as expressed in terms of standard polystyrene. As a result, SBR1 was found to be Mw = 900,000, and SBR2 was found to be Mw = 1,200,000.

[Production Example 1: Production of Fine Particle Size Silica (Silica 1)]

In a 180-liter jacketed stainless streel reaction tank equipped with a stirrer, 65 liters of water and 1.25 liters of a sodium silicate aqueous solution ($SiO_2$: 160 g/L, $SiO_2/Na_2O$ molar ratio: 3.3) were charged and heated at 96°C. The produced solution had a $Na_2O$ concentration of 0.015 mol/L.

While maintaining the temperature of this solution at 96°C, the same sodium silicate aqueous solution as mentioned above and sulfuric acid (18 mol/L) were simultaneously dropped at a flow rate of 750 mL/min and 33 mL/min, respectively. A neutralization reaction was performed while adjusting the flow rates and maintaining the $Na_2O$ concentration in the reaction solution in a range of from 0.005 to 0.035 mol/L. The reaction solution began to become cloudy from the middle of the reaction, and after elapsing 30 minutes, the viscosity increased, whereby the reaction solution became a gel-like solution. The addition was further continued, and after elapsing 100 minutes, the reaction was terminated. The produced solution had a silica concentration of 85 g/L. Subsequently, the same sulfuric acid as mentioned above was added until the solution reached a pH of 3, to obtain a silicate slurry. The obtained silicate slurry was filtered by a filter press and washed with water to obtain a wet cake. Subsequently, the wet cake was formed into a slurry by using an emulsification apparatus, which was then dried with a spray type drier, to obtain a wet fine particle size silica (Silica 1) serving as the hydrated silicate.

<Preparation of Tire>

A rubber composition for tread to be used for each of the center section and the shoulder sections was prepared in a mixing ratio (parts by mass) shown in Tables 1 to 3.

Using the prepared rubber composition for tread, a tire for two-wheel vehicle (size: 180/55 ZR17) including a pair of bead sections, a pair of side wall sections, and a tread section continuing to the both sidewall sections, the tread section being divided into three by a center section including a tire equatorial plane and a pair of shoulder sections including a tread end in the tire width direction, was trial produced by a conventional method, and a tread of the tire for two-wheel vehicle was formed of the foregoing rubber composition.

The wet grip performance and the abrasion resistance of each rubber composition for tread used for a tread of the tire for two-wheel vehicle were evaluated in the following manner.

<Performance Evaluation>

1. Wet Grip Performance Test (Grip Performance on Wet Road Surface)

On the course of the wet road, a test rider carried out various travels and evaluated the feeling about the wet grip performance of the tire during travel. Evaluation results are shown in Tables 2 and 3.

The evaluation result of Example 1 was calculated to be 7.5 with a maximum of 10 points, and the index as a relative evaluation was calculated.

It is shown that the greater the index, the greater the wet grip performance of the tire is. A tolerance was defined to be 7.0.

2. Abrasion Resistance Test

On the test course on the paved road, a test rider made the vehicle travel 3,500 km at 80 km/h. Then, the amount of a remaining groove after travel was measured, and the abrasion resistance of the tire was evaluated from the amount of the remaining groove. Evaluation results are shown in Tables 2 and 3.

The evaluation result of Comparative Example 1 was defined to be 100, and the index as a relative evaluation was calculated.

It is shown that the greater the index, the greater the abrasion resistance of the tire is. A tolerance was defined to be 115 or more.

3. Peak Temperature of Loss Tangent tan $\delta$ of Each Tread Rubber

The peak temperature of a loss tangent tan $\delta$ of each tread rubber was measured. Specifically, the peak temperature of a loss tangent tan $\delta$ was measured at from -30°C to 60°C under a condition of temperature dispersion of an initial strain of 10%, a 1% dynamic strain, a frequency of 52 Hz, and a temperature rise rate of 2°C/ min by using a dynamic spectrometer (manufactured by Ueshima Seisakusho Co., Ltd.). Results of each tread rubber are shown in Tables 2 and 3.

Table 1

| Composition: Rubber composition for tread | | | |
|---|---|---|---|
| Rubber component | Rubber components shown in Table 2 or 3 | | Amount shown in Table 2 or 3 (Total: 100 parts) |
| Filler | Silica | Silica 1 (*1) | Amount shown in Table 2 or 3 |
| | | Silica 1 (*2) | Amount shown in Table 2 or 3 |
| | Carbon Black (*3) | | Amount shown in Table 2 or 3 |
| Vulcanizing agent | Sulfur | | 1.8 |
| Other additive components | Silane coupling agent (*4) | | Amount to be 10% based on the mixing amount of all of silicas |
| | Zinc oxide (*5) | | 2.0 |
| | Oil (*6) | | Amount shown in Table 2 or 3 |
| | Resin (*7) | | Amount shown in Table 2 or 3 |
| | Stearic acid | | 1.5 |
| | Antioxidant 6C (*8) | | 2.0 |
| | Vulcanization accelerator DPG (*9) | | 3.0 |
| | Vulcanization accelerator CZ (*10) | | 2.0 |
| (parts by mass) | | | |

1: (Silica 1): Fine particle size silica produced in Production Example 1 (CTAB: 79 $m^2/g$, value of the formula (Y): 58.00, ink bottle-shaped micropore index (IB): 55.00)
*2: (Silica 2): NIPSIL All, manufactured by Tosoh Silica Corporation (CTAB: 165 $m^2/g$, value of the formula (Y): 27.40, ink bottle-shaped micropore index (IB): 34.10)
*3: (Carbon black): VULCAN 10H, manufactured by CABOT Corporation, $N_2SA$: 142 $m^2/g$, CTAB: 135 $m^2/g$, DBP: 127 mL/100g
*4: (Silane coupling agent): ABC-856, manufactured by Shin-Etsu Chemical Co., Ltd.
*5: (Zinc oxide): No. 2 zinc oxide, manufactured by HAKUSUI TECK Co., Ltd.
*6: (Oil): A/O MIX, manufactured by Sankyo Yuka Kogyo K.K.

The oil amount shown in the "Oil" column in Table 2 is the sum total of the oil amount of "A/O MIX" and the oil amount in SBR1 or SBR2.

*7 (Resin): HARITACK AQ-100B, manufactured by Harima Chemicals, Inc.
*8: (Antioxidant 6C): ANTIGEN 6C, manufactured by Sumitomo Chemical Co., Ltd.
*9: (Vulcanization accelerator (DPG)): SOXINOL D, manufactured by Sumitomo Chemical Co., Ltd.
*10: (Vulcanization accelerator (CZ)): NOCCELER CZ-G, manufactured by Ouchi Shinko Industrial Co., Ltd.

]

Table 2

| | | Example 1 | | Example 2 | | Example 3 | | Reference Example 4 | | Reference Example 5 | | Reference Example 6 | | Example 7 | | Example 8 | | Example 9 | |
|---|---|---|---|---|---|---|---|---|---|---|---|---|---|---|---|---|---|---|---|
| | | CL | Sho | CL | Sho | CL | Sho | CL | Sho | CL | Sho | CL | Sho | CL | Sho | CL | Sho | CL | Sho |
| Rubber component | Modified BR | 30 | 15 | 30 | 15 | 30 | 15 | 30 | | | 15 | | | 30 | 15 | 30 | 15 | 30 | 15 |
| | Unmodified BR | | | | | | | | 15 | 30 | | 30 | 15 | | | | | | |
| | SBR1 | | 85 | 70 | 85 | | 85 | | 85 | | 85 | | 85 | | 85 | | 85 | | 85 |
| | SBR2 (high molecular weight) | 70 | | | | 70 | | 70 | | 70 | | 70 | | 70 | | 70 | | 70 | |
| Filler | Carbon | 10 | 10 | 10 | 10 | 10 | 10 | 10 | 10 | 10 | 10 | 10 | 10 | 10 | 10 | 10 | 10 | 10 | 10 |
| | Silica 1: Fine particle base | 90 | 95 | 90 | 95 | | | 90 | 95 | 90 | 95 | 90 | 95 | 90 | 95 | 90 | 95 | 90 | 95 |
| | Silica 2 | | | | | 90 | 95 | | | | | | | | | | | | |
| Others | Oil | 15 | 10 | 15 | 10 | 15 | 10 | 15 | 10 | 15 | 10 | 15 | 10 | 7 | 10 | 16 | 10 | 19 | 10 |
| | Resin | 20 | 25 | 20 | 25 | 20 | 25 | 20 | 25 | 20 | 25 | 20 | 25 | 28 | 25 | 21 | 25 | 16 | 25 |
| Physical properties | Peak temperature (°C) of tan δ | -3 | -1 | -3 | -1 | -3 | -1 | -3 | -1 | -3 | -1 | -3 | -1 | -11 | -1 | -4 | -1 | -7 | -1 |
| | High-molecular weight SBR | Yes | No | No | No | Yes | No | Yes | No | Yes | No | Yes | No | Yes | No | Yes | No | Yes | No |
| Evaluation | Wet grip performance | 7.5 | | 7.5 | | 7.0 | | 7.4 | | 7.3 | | 7.1 | | 7.1 | | 7.5 | | 7.3 | |
| | Abrasion resistance | 128 | | 124 | | 123 | | 128 | | 122 | | 116 | | 143 | | 129 | | 135 | |

Table 3

| | | Comparative Example 1 | | Comparative Example 2 | | Comparative Example 3 | | Comparative Example 4 | | Comparative Example 5 | | Comparative Example 6 | | Comparative Example 7 | |
|---|---|---|---|---|---|---|---|---|---|---|---|---|---|---|---|
| | | CL | Sho | CL | Sho | CL | Sho | CL | Sho | CL | Sho | CL | Sho | CL | Sho |
| Rubber component | Modified BR | | | | | 30 | | 30 | 15 | | | 30 | 15 | 30 | 15 |
| | Unmodified BR | 30 | 15 | 30 | 15 | | 15 | | | 30 | 15 | | | | |
| | SBR1 | 70 | 85 | 70 | 85 | 70 | 85 | 70 | 85 | | 85 | | 85 | | 85 |
| | SBR2 (high molecular weight) | | | | | | | | | 70 | | 70 | | 70 | |
| Filler | Carbon | 50 | 50 | 10 | 10 | 10 | 10 | 10 | 10 | 10 | 10 | 10 | 10 | 10 | 10 |
| | Silica 1: Fine particle base | | | | | | | | | | | | | 90 | 95 |
| | Silica 2 | 60 | 55 | 90 | 95 | 90 | 95 | 90 | 95 | 90 | 95 | 90 | 95 | | |
| Others | Oil | 20 | 20 | 20 | 20 | 20 | 20 | 20 | 20 | 20 | 20 | 20 | 20 | 13 | 12 |
| | Resin | 20 | 30 | 20 | 30 | 20 | 30 | 20 | 30 | 20 | 30 | 20 | 30 | 22 | 23 |
| Physical properties | Peak temperature (°C) of tan δ | 0 | 0 | 0 | 0 | 0 | 0 | 0 | 0 | 0 | 0 | 0 | 0 | -1 | -3 |
| | High-molecular weight SBR | No | No | No | No | No | No | No | No | Yes | No | Yes | No | Yes | No |
| Evaluation | Wet grip performance | 6.0 | | 6.1 | | 6.3 | | 6.4 | | 6.1 | | 6.4 | | 6.9 | |
| | Abrasion resistance | 100 | | 102 | | 108 | | 108 | | 107 | | 113 | | 113 | |

As shown in Tables 2 and 3, it was noted that in the case where the peak temperature of loss tangent tan δ of the tread rubber of the center section is lower than the peak temperature of loss tangent tan δ of the tread rubber of the shoulder sections ($T_{CL} < Ts_{HO}$), an excellent wet grip performance is exhibited while maintaining high abrasion resistance.

In contrast, in the Comparative Examples of $T_{CL} \geq T_{SHO}$, the abrasion resistance was inferior, and the wet grip performance did not reach a tolerable level.

INDUSTRIAL APPLICABILITY

The tire for two-wheel vehicle of the present invention can be suitably used as a tire for competition two-wheel vehicle, a tire for general public roadway two-wheel vehicle, a tire for an on-road two-wheel vehicle, or a tire for an off-road two-wheel vehicle.

Reference Signs List

10: Tire for two-wheel vehicle
11: Tread section
12: Bead section
13: Bead core
14: Side wall section
15: Carcass layer
16: Tread rubber of center section
17: Tread rubber of shoulder section
18: Base rubber
20: Center section
22: Shoulder section
23: Equatorial plane
24: Tire tread end

**Claims**

**1.** A tire for two-wheel vehicle (10) comprising a pair of bead sections (12), a pair of sidewall sections (14), and a tread section (11) continuing to the both sidewall sections (14), the tread section (11) being divided into three by a center section (20) including a tire equatorial plane (23) and a pair of shoulder sections (22) including a tread end (24) in the tire width direction, **characterized in that**

a tread rubber of the center section (16) and a tread rubber of the shoulder sections (17) each contain a rubber component and satisfy the following formula (1):

(Peak temperature of loss tangent tan δ of tread rubber of the center section) < (Peak temperature of loss tangent tan δ of tread rubber of the shoulder sections)  (1),

wherein the peak temperature of a loss tangent tan δ is measured at from -30°C to 60°C under a condition of temperature dispersion of an initial strain of 10%, a 1% dynamic strain, a frequency of 52 Hz, and a temperature rise rate of 2°C/ min by using a dynamic spectrometer,
both the tread rubber of the center section (16) and the tread rubber of the shoulder sections (17) each contain a modified conjugated diene-based polymer as the rubber component,
the content of the modified conjugated diene-based polymer in the rubber component is 10% by mass or more, respectively.
the content of the modified conjugated diene-based polymer in tread rubber of the center section (16) is larger than the content of the modified conjugated diene-based polymer in the tread rubber of the shoulder sections (17), and
both the tread rubber of the center section (16) and the tread rubber of the shoulder sections (17) each further

contain a filler containing 80% by mass or more of silica.

2. The tire for two-wheel vehicle (10) according to claim 1, wherein the peak temperature of loss tangent tan δ of the tread rubber of the center section (16) is -20°C or higher and 5°C or lower.

3. The tire for two-wheel vehicle (10) according to claim 1 or 2, wherein a difference between the peak temperature of loss tangent tan δ of the tread rubber of the center section (16) and the peak temperature of loss tangent tan δ of the tread rubber of the shoulder sections (17) is more than 0°C and 10°C or lower.

4. The tire for two-wheel vehicle (10) according to any one of claims 1 to 3, wherein both the tread rubber of the center section (16) and the tread rubber of the shoulder sections (17) each contain a styrene-butadiene-based rubber as the rubber component, and
a weight average molecular weight of the styrene-butadiene-based rubber to be contained in the tread rubber of the center section (16) is larger than a weight average molecular weight of the styrene-butadiene-based rubber to be contained in the shoulder sections (22).

5. The tire for two-wheel vehicle (10) according to claim 4, wherein the weight average molecular weight of the styrene-butadiene-based rubber to be contained in the tread rubber of the center section (16) is 1,070,000 or more.

6. The tire for two-wheel vehicle (10) according to any one of claims 1 to 5, wherein both the tread rubber of the center section (16) and the tread rubber of the shoulder sections (17) each further contain a filler containing the silica in an amount of 70 parts by mass or more based on 100 parts by mass of the rubber component.

## Patentansprüche

1. Reifen für zweirädriges Fahrzeug (10), der ein Paar von Wulstabschnitten (12), ein Paar von Seitenwandabschnitten (14) und einen Laufflächenabschnitt (11), der sich zu den beiden Seitenwandabschnitten (14) fortsetzt, umfasst, wobei der Laufflächenabschnitt (11) durch einen Mittelabschnitt (20), der eine Reifenäquatorialebene (23) einschließt, und ein Paar von Schulterabschnitten (22), die ein Laufflächenende (24) in der Reifenbreitenrichtung einschließen, in drei geteilt wird, **dadurch gekennzeichnet, dass**
ein Laufflächengummi des Mittelabschnitts (16) und ein Laufflächengummi der Schulterabschnitte (17) jeweils eine Gummikomponente enthalten und die folgende Formel (1) erfüllen:

(Spitzentemperatur des Verlustfaktors tan δ des Laufflächengummis des Mittelabschnitts) < (Spitzentemperatur des Verlustfaktors tan δ des Laufflächengummis der Schulterabschnitte) (1),
wobei die Spitzentemperatur des Verlustfaktors tan δ bei von -30 °C bis 60 °C unter Temperaturverteilungsbedingungen einer anfänglichen Dehnung von 10 %, einer dynamischen Dehnung von 1 %, einer Frequenz von 52 Hz und einer Temperaturanstiegsgeschwindigkeit von 2 °C/min durch Verwendung eines dynamischen Spektrometers gemessen wird,
wobei sowohl der Laufflächengummi des Mittelabschnitts (16) als auch der Laufflächengummi der Schulterabschnitte (17) jeweils ein modifiziertes konjugiertes Polymer auf Dien-Grundlage als die Gummikomponente enthalten,
wobei der Gehalt des modifizierten konjugierten Polymers auf Dien-Grundlage in der Gummikomponente jeweils 10 % Massenanteil oder mehr beträgt,
wobei der Gehalt des modifizierten konjugierten Polymers auf Dien-Grundlage in dem Laufflächengummi des Mittelabschnitts (16) größer ist als der Gehalt des modifizierten konjugierten Polymers auf Dien-Grundlage in dem Laufflächengummi der Schulterabschnitte (17) und
sowohl der Laufflächengummi des Mittelabschnitts (16) als auch der Laufflächengummi der Schulterabschnitte (17) jeweils ferner einen Füllstoff enthalten, der 80 % Masseanteil oder mehr an Siliziumdioxid enthält.

2. Reifen für zweirädriges Fahrzeug (10) nach Anspruch 1, wobei die Spitzentemperatur des Verlustfaktors tan δ des Laufflächengummis des Mittelabschnitts (16) bei -20 °C oder höher und 5 °C oder niedriger liegt.

3. Reifen für zweirädriges Fahrzeug (10) nach Anspruch 1 oder 2, wobei eine Differenz zwischen der Spitzentemperatur des Verlustfaktors tan δ des Laufflächengummis des Mittelabschnitts (16) und der Spitzentemperatur des Verlustfaktors tan δ des Laufflächengummis der Schulterabschnitte (17) bei mehr als 0 °C und 10 °C oder weniger liegt.

4. Reifen für zweirädriges Fahrzeug (10) nach einem der Ansprüche 1 bis 3, wobei sowohl der Laufflächengummi des Mittelabschnitts (16) als auch der Laufflächengummi der Schulterabschnitte (17) jeweils einen Gummi auf Styrol-Butadien-Grundlage als die Gummikomponente enthalten und
ein Gewichtsmittel der Molmasse des Gummis auf Styrol-Butadien-Grundlage, der in dem Laufflächengummi des Mittelabschnitts (16) enthalten sein soll, größer ist als ein Gewichtsmittel der Molmasse des Gummis auf Styrol-Butadien-Grundlage, der in den Schulterabschnitten (22) enthalten sein soll.

5. Reifen für zweirädriges Fahrzeug (10) nach Anspruch 4, wobei das Gewichtsmittel der Molmasse des Gummis auf Styrol-Butadien-Grundlage, der in dem Laufflächengummi des Mittelabschnitts (16) enthalten sein soll, 1 070 000 oder mehr beträgt.

6. Reifen für zweirädriges Fahrzeug (10) nach einem der Ansprüche 1 bis 5, wobei sowohl der Laufflächengummi des Mittelabschnitts (16) als auch der Laufflächengummi der Schulterabschnitte (17) jeweils ferner einen Füllstoff enthalten, der das Siliziumdioxid in einer Menge von 70 Masseteilen oder mehr auf Grundlage von 100 Masseteilen der Gummikomponente enthält.

## Revendications

1. Bandage pneumatique pour véhicule à deux roues (10), comprenant une paire de sections de talon (12), une paire de sections de flanc (14) et une section de bande de roulement (11) se prolongeant vers les deux sections de flanc (14), la section de bande de roulement (11) étant divisée en trois par une section centrale (20) comprenant un plan équatorial (23) du bandage pneumatique et une paire de sections d'épaulement (22) comprenant une extrémité de la bande de roulement (24) dans une direction de la largeur du bandage pneumatique, **caractérisé en ce que** :
une gomme de bande de roulement de la section centrale (16) et une gomme de bande de roulement des sections d'épaulement (17) contiennent chacune un composant de caoutchouc et satisfont la formule suivante :

    (température maximale de la tangente de perte tan $\delta$ de la gomme de la bande de roulement de la section centrale) < (température maximale de la tangente de perte tan $\delta$ de la gomme de la bande de roulement des sections d'épaulement) (1) ;
    dans lequel la température maximale d'une tangente de perte tan $\delta$ est mesurée entre 30°C et 60°C dans des conditions de dispersion de température d'une contrainte initiale de 10%, d'une contrainte dynamique de 1%, d'une fréquence de 52 Hz et d'une vitesse de montée en température de 2°C/min en utilisant un spectromètre dynamique ;
    à la fois la gomme de la bande de roulement de la section centrale (16) et la gomme de la bande de roulement des sections d'épaulement (17) contiennent chacune un polymère à base de diène conjugué modifié en tant que composant de caoutchouc ;
    la teneur en polymère à base de diène conjugué modifié dans le composant de caoutchouc représente 10% en poids ou plus, respectivement ;
    la teneur du polymère à base de diène conjugué modifié de la gomme de la bande de roulement de la section centrale (16) est supérieure à la teneur en polymère à base de diène conjugué modifié dans la forme de la bande de roulement des sections d'épaulement (17) ; et
    à la fois la gomme de la bande de roulement de la section centrale (16) et la gomme de la bande de roulement des sections d'épaulement (17) contiennent chacune en outre une charge contenant 80% en poids ou plus de silice.

2. Bandage pneumatique pour véhicule à deux roues (10) selon la revendication 1, dans lequel la température maximale de la tangente de perte tan $\delta$ de la gomme de la bande de roulement de la section centrale (16) correspond à -20°C ou plus et à 5°C ou moins.

3. Bandage pneumatique pour véhicule à eux roues (10) selon les revendications 1 ou 2, dans lequel une différence entre la température maximale de la tangente de perte tan $\delta$ de la gomme de la bande de roulement de la section centrale (16) et la température maximale de la tangente de perte tan $\delta$ de la gomme de la bande de roulement des sections d'épaulement (17) est supérieure à 0°C et 10°C ou moins.

4. Bandage pneumatique pour véhicule à deux-roues (10) selon l'une quelconque des revendications 1 à 3, dans lequel à la fois la gomme de la bande de roulement de la section centrale (16) et la gomme de la bande de roulement des sections d'épaulement (17) contiennent chacune un caoutchouc à base de styrène-butadiène en tant que

composant de caoutchouc ; et
une masse moléculaire moyenne en poids du caoutchouc à base styrène-butadiène devant être contenue dans la gomme de la bande de roulement de la section centrale (16) est supérieure à une masse moléculaire moyenne en poids du caoutchouc à base de styrène-butadiène devant être contenue dans les sections d'épaulement (22).

**5.** Bandage pneumatique pour véhicule à deux roues (10) selon la revendication 4, dans laquelle la masse moléculaire moyenne en poids du caoutchouc à base de styrène-butadiène devant être contenue dans la gomme de la bande de roulement de la section centrale (16) correspond à 1.070.000 ou plus.

**6.** Bandage pneumatique pour véhicule à deux roues (10) selon l'une quelconque des revendications 1 à 5, dans lequel à la fois la gomme de la bande de roulement de la section centrale (16) et la gomme de la bande de roulement des sections d'épaulement (17) contiennent chacune en outre une charge contenant la silice en une quantité représentant 70 parties en poids ou plus sur la base de 100 parties en poids du composant de caoutchouc.

[Fig. 1]

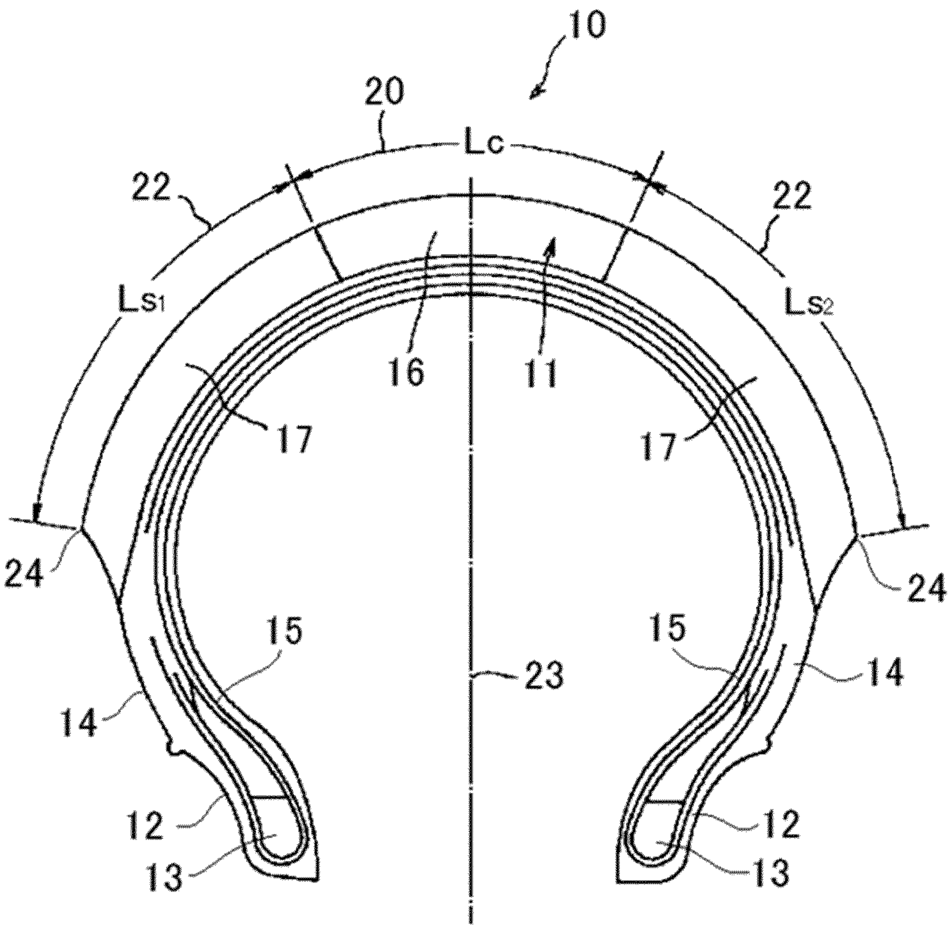

[Fig. 2]

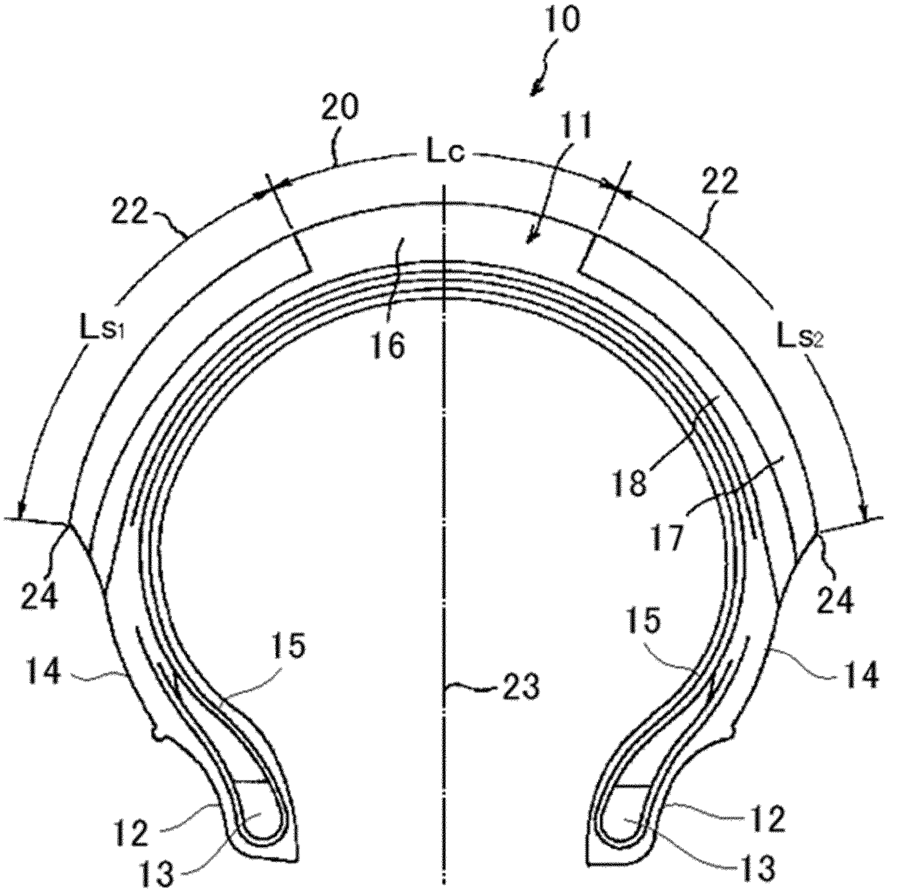
10
20
Lc
11
22
22
Ls1
Ls2
16
18
17
24
24
15
15
14
14
23
12
12
13
13

[Fig. 3]

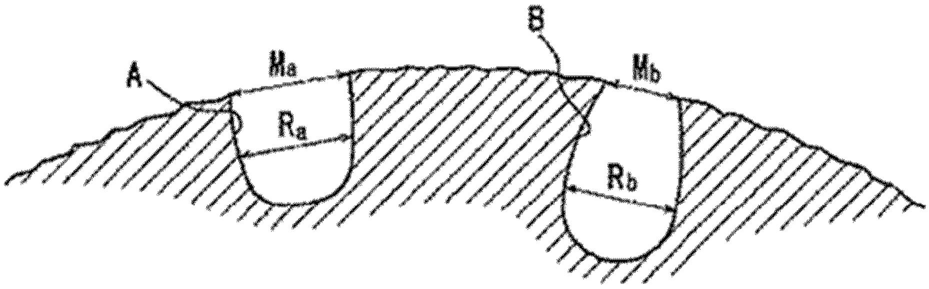
A
Ma
Ra
B
Mb
Rb

[Fig. 4]

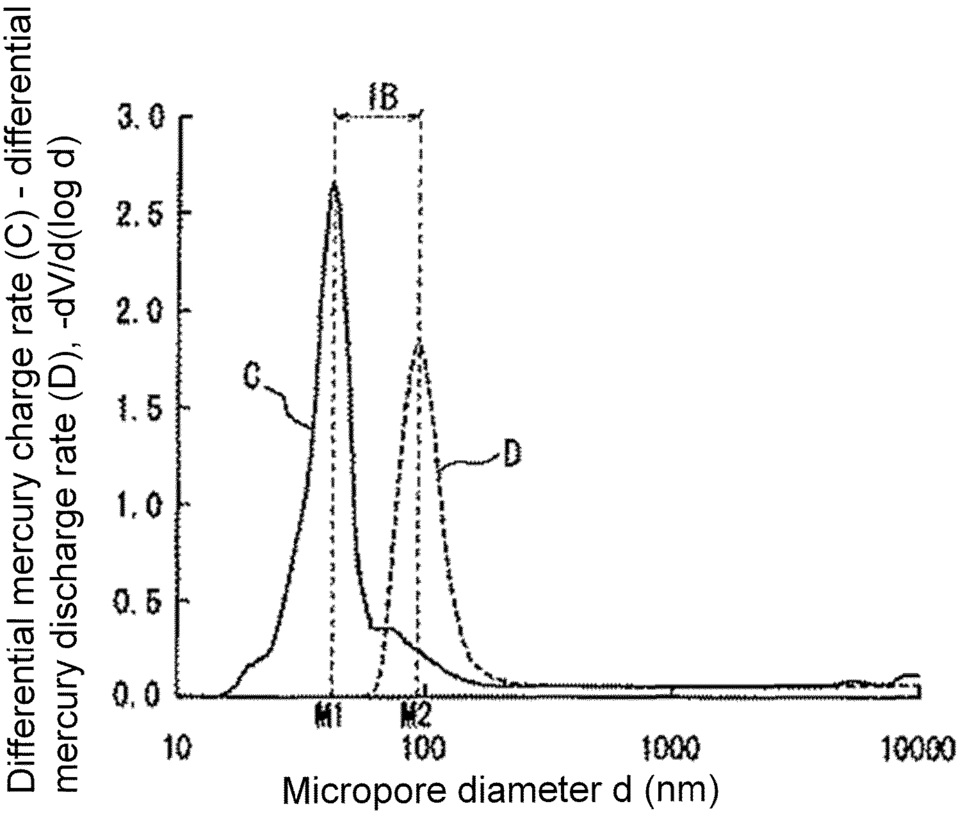
Differential mercury charge rate (C) - differential mercury discharge rate (D), -dV/d(log d)
3.0
2.5
2.0
1.5
1.0
0.5
0.0
fB
C
D
M1
M2
10
100
1000
10000
Micropore diameter d (nm)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008093473 A
- JP H07108805 B
- JP H07164822 B
- JP 2014009324 A
- JP 2006273240 A